# EUROPÄISCHE PATENTANMELDUNG

(11) **EP 4 190 144 A1**
(43) Veröffentlichungstag der Anmeldung: **07.06.2023**
(21) Anmeldenummer: 22020574.4
(22) Anmeldetag: 23.11.2022
(51) Int. Cl.: A01G 31/02, A01G 9/02, A01G 9/22

(54) **MEDIUMDURCHSTRÖMBARER KÖRPER SOWIE BEGRÜNUNGSSYSTEM MIT ZUMINDEST EINEM SOLCHEN MEDIUMDURCHSTRÖMBAREN KÖRPER**

(30) Priorität: 01.12.2021 DE 102021005947
(71) Anmelder: Voss Automotive GmbH, 51688 Wipperfürth (DE)
(72) Erfinder: Kolberg, Ralf, 50733 Köln (DE); Völkel, Anne, 50935 Köln (DE); Lösing, Jan, 41267 Göteborg (SE)
(74) Vertreter: Rebbereh, Cornelia

(57) **Zusammenfassung**

Bei einem mediumdurchströmbaren Körper (1), insbesondere fluid- und/oder gasdurchströmbarer Körper, mit zumindest einer Außenseite (14) ist der mediumdurchströmbare Körper (1) selbsttragend oder umfasst zumindest einen mechanische Stabilität verleihenden Tragkörper (11), und umfasst der mediumdurchströmbare Körper (1) ferner zumindest eine Nährstoffe und/oder Fluid aufnehmende Einrichtung (13), wobei die Außenseite (14) des mediumdurchströmbaren Körpers (1) als Trägereinrichtung zum Tragen von Pflanzen ausgebildet ist. Bei einem Begrünungssystem (3) mit zumindest einem Begrünungselement (5) zur Montage an einer Fläche (62, 70) und zumindest einer Mediumzuführeinrichtung (38) zum Speisen des zumindest einen Begrünungselements (5) mit Medium und zumindest einer Mediumabführeinrichtung (39) zum Abführen von Medium aus dem zumindest einen Begrünungselement (5) umfasst das zumindest eine Begrünungselement (5) zumindest einen solchen mediumdurchströmbaren Körper (1) und ist oder wird der zumindest eine mediumdurchströmbare Körper (1) im Raum so angeordnet, dass ein Gefälle zum Erzeugen einer Strömung und/oder eine Mediumverteilung in dem zumindest einen mediumdurchströmbaren Körper (1) vorgesehen ist.

## Beschreibung

Die Erfindung betrifft einen mediumdurchströmbaren Körper, insbesondere fluid- und/oder gasdurchströmbaren Körper, mit zumindest einer Außenseite, wobei der mediumdurchströmbare Körper selbsttragend ist oder zumindest einen mechanische Stabilität verleihenden Tragkörper umfasst, sowie ein Begrünungssystem mit zumindest einem Begrünungselement zur Montage an einer Fläche, umfassend zumindest einen solchen mediumdurchströmbaren Körper, insbesondere fluid- und/oder gasdurchströmbaren Körper.

Mediumdurchströmbare Körper, wie solche, die von einem Fluid und/oder einem Gas durchströmt werden, sind im Stand der Technik in Form von Rohrleitungen zum Zu- und Abführen von Medium bekannt. Auch Begrünungssysteme zum Begrünen von Flächen, wie vertikalen Flächen, z.B. Fassaden von Gebäuden, sind bekannt. Beispielsweise werden sog. modulare Begrünungssysteme als Alternative zur klassischen Fassadenbegrünung eingesetzt, wie beim Kaufhaus "Galeries Lafayette" in Berlin. Dort wächst an der Fassade ein vertikaler Garten, wobei die Grünpflanzen nicht aus dem Erdboden oder aus bodenständigen Kübeln nach oben wachsen, sondern in Form von bepflanzten Modulen auf einer Fassade montiert werden. Ferner sind auch Pflanzentaschen und ähnliche Hängesysteme zur Begrünung von u.a. Fassaden bekannt. Pflanzen wachsen hierbei aus speziellen Töpfen, Pflanztaschen oder Substratplatten frei in den Raum, wobei Bewässerungseinrichtungen sowie Pumpen und Messinstrumente ebenfalls vorgesehen werden. Bekannt ist es ferner, Rankhilfen zum Beispiel aus Holz, Kunststoff, Metall oder Textil vorzusehen und diese in Form von Seilen, Stäben und Gittern an einer Fassade eines Gebäudes anzubringen.

Ferner ist ein Wandbegrünungssystem der Firma GKR Hydro GmbH bekannt, bei dem die Pflanzen in Wandbegrünungsmodulen wachsen. Hierbei werden die obersten Wandbegrünungselemente entweder an eine Dachentwässerung angeschlossen oder über einen Niederschlagswassertank und an diesem angeschlossene Pumpen mit Wasser gespeist. Nachfolgend läuft das Wasser vom obersten Wandbegrünungselement bzw. Pflanzmodul über dessen Wasserüberlauföffnung in das darunterliegende Pflanzmodul, von dort in das nächst darunterliegende Pflanzmodul usw. bis zum Erreichen des untersten Pflanzmoduls. Von dem untersten Pflanzmodul aus läuft das Wasser zurück in den Niederschlagswassertank, von dem aus es nachfolgend wieder zu dem obersten Pflanzmodul gepumpt wird. Vor der entsprechenden Gebäudefassade wird ein Rankpflanzengerüst aufgebaut, auf dem verschiebbare Rankpflanzengefäße rollbar montiert werden. Über Befestigungsanker erfolgt eine Fixierung des Rankpflanzengerüsts an der Gebäudefassade. Es ist erforderlich, ein Bodenfundament vorzusehen zum Aufbau des vorgeständerten Gerüsts zum Befestigen der Rankpflanzengefäße. Zierblenden dienen dem Verdecken der Versorgungsleitungen zum Zuführen bzw. Weiterleiten des Wassers zu und von den Pflanzgefäßen.

Man unterscheidet zwischen bodengebundenen, troggebundenen und wandgebundenen Systemen. Bodengebundene Systeme, bei denen z.B. Efeu oder wilder Wein an einer Fläche hochranken, weisen eine Maximalhöhe auf, die begrünt werden kann. Darüber ist systembedingt keine Begrünung möglich. Durch Humusbildung der welken Blätter entwickeln die Pflanzen ferner neben den die Fläche, wie eine Fassade wenig angreifenden, somit "sanften", Haltewurzeln im Laufe der Jahre festes Wurzelwerk, das sich in die Fläche bzw. Fassade frisst und die Fassade zerstört. Troggebundene Systeme oder auch teilwandgebundene Systeme umfassen diverse Pflanzen von z.B. Sukkulenten bis zu Buschgewächsen. Hier ist ebenfalls die Maximalhöhe des Bewuchses begrenzt. Zusätzlich erfordern die troggebundenen Systeme ein Bewässerungssystem, das selten auf das Trogsystem abgestimmt ist, da es sich um herkömmliche Pflanzkübel mit Standard-Fassadenbefestigungstechnik handelt. Ferner sind die mit Abstand teuersten, wandgebundenen Systeme bekannt, die auch als "Vertical Garden" bezeichnet werden. Diese Systeme sind selbsttragend ausgelegt, da sie ein zu hohes Gewicht aufweisen, also zu schwer für eine direkte Befestigung an einer Fläche, wie einer Fassade, sind. Als problematisch erweist sich somit das hohe Gewicht der Begrünungsmodule, was zu Problemen bei der Wandbefestigung von Modulen und Gerüsten ganz besonders bei leichten Vormauerschalen, Wandbekleidungen und Wärmedämmungen, aber auch anderen Fassaden führt.

Die durch das Begrünen der Fassadenfläche entstehenden Lasten sind bei diesen Lösungen des Standes der Technik durchaus erheblich.

Der vorliegenden Erfindung liegt nun die Aufgabe zugrunde, ein Begrünungssystem, das zumindest einen mediumdurchströmbaren Körper aufweist, ebenso wie einen mediumdurchströmbaren Körper für ein solches Begrünungssystem vorzusehen, das eine wirtschaftliche Begrünung, insbesondere Vertikalbegrünung, von Fassaden bzw. Gebäuden in beliebigen Abmessungen ermöglicht, wobei das Begrünungssystem eine einfachere Bewirtschaftung und Wartung als die bekannten Begrünungssysteme ermöglicht und eine Zerstörung der Fläche, wie einer Fassade eines Gebäudes, durch Wurzelwerk und das Bewässerungssystem vermieden werden können..

Die Aufgabe wird für einen mediumdurchströmbaren Körper nach dem Oberbegriff des Anspruchs 1 dadurch gelöst, dass der mediumdurchströmbare Körper zumindest eine Nährstoffe und/oder Fluid aufnehmende Einrichtung umfasst, wobei die Außenseite des mediumdurchströmbaren Körpers als Trägereinrichtung zum Tragen von Pflanzen ausgebildet ist. Für ein Begrünungssystem wird die Aufgabe dadurch gelöst, dass das Begrünungssystem mit zumindest einem Begrünungselement zur Montage an einer vertikalen Fläche, insbesondere einer Gebäudefassade oder einem Wandelement, und zumindest einer Mediumzuführeinrichtung zum Speisen des zumindest einen Begrünungselements mit Medium und zumindest einer Mediumabführeinrichtung zum Abführen von Medium aus dem zumindest einen Begrünungselement, wobei das zumindest eine Begrünungselement zumindest einen solchen mediumdurchströmbaren Körper, insbesondere fluid- und/oder gasdurchströmbaren Körper, umfasst und wobei der zumindest eine mediumdurchströmbare Körper im Raum so angeordnet ist oder wird, dass ein Gefälle zum Erzeugen einer Strömung und/oder eine Mediumverteilung in dem zumindest einen mediumdurchströmbaren Körper vorgesehen ist. Weiterbildungen der Erfindung sind in den abhängigen Ansprüchen definiert.

Dadurch werden ein mediumdurchströmbarer Körper und ein Begrünungssystem mit zumindest einem solchen mediumdurchströmbaren Körper geschaffen, bei dem durch das Vorsehen der zumindest einen Nährstoffe und/oder Fluid aufnehmenden Einrichtung des mediumdurchströmbaren Körpers, der auf seiner Außenseite als Trageinrichtung zum Tragen von Pflanzen ausgebildet ist, die Pflanzen vollständig mit Wasser und/oder Nährstoffen versorgt werden können. Der mediumdurchströmbare Körper ist entweder selbsttragend oder umfasst zumindest einen mechanische Stabilität verleihenden Tragkörper. Ein solcher kann z.B. ein Doppel-T-Träger sein.

Auf der Außenseite des mediumdurchströmbaren Körpers können sich Pflanzen herum ranken oder dort aufwachsen. Somit ist es nicht mehr erforderlich, ein Gerüst mit zahlreichen Rankpflanzengefäßen und Versorgungsleitungen vorzusehen oder Pflanzmodule sehr aufwendig an einer Fassade eines Gebäudes zu befestigen, sondern die Pflanzen wachsen direkt auf dem mediumdurchströmbaren Körper zumindest eines Begrünungselements des Begrünungssystems auf. Dies bringt nicht nur Kostenvorteile, sondern auch Gewichtsvorteile mit sich, da das Begrünungssystem kostengünstiger als die bekannten Lösungen ist und zudem ein geringeres Gewicht als die bekannten wandgebundenen Systeme aufweist. Dennoch sind ein Wachstum der Pflanzen in beliebiger Höhe und eine einfachere Bewirtschaftung möglich, insbesondere beim Bepflanzen mit pflegeleichten Pflanzen, wobei ein unerwünschtes Eindringen von Wurzeln in die Fassade nicht erfolgt.

Das Begrünungssystem umfasst außer dem zumindest einen Begrünungselement, das zumindest einen mediumdurchströmbaren Körper aufweist, der mit Medium, wie Gas und/oder Fluid, durchströmt werden kann, auch zumindest eine Mediumzuführeinrichtung zum Speisen des zumindest einen mediumdurchströmbaren Körpers mit Medium, wie Fluid und/oder Gas, und zumindest eine Mediumabführeinrichtung zum Abführen von Medium aus dem zumindest einen Begrünungselement auf. Das zumindest eine Begrünungselement wird an einer Fläche, wie z.B. einer geneigten oder einer vertikalen Fläche, z.B. einer Fassade eines Gebäudes, angeordnet. Um eine selbstständige Strömung innerhalb des zumindest einen mediumdurchströmbaren Körpers zu ermöglichen, wird oder ist dieser im Raum so angeordnet, dass ein Gefälle zum Erzeugen einer Strömung und/oder einer Mediumverteilung in dem zumindest einen mediumdurchströmbaren Körper vorgesehen ist. Wird somit das Medium in der Betriebsposition des Begrünungselements von oben in den zumindest einen mediumdurchströmbaren Körper eingespeist, strömt es selbstständig durch diesen hindurch aufgrund Wirkens der Schwerkraft bzw. verteilt sich in diesem. Bei vorteilhaftem Vorsehen eines Mediumauslasses kann das Medium wieder aus dem zumindest einen Begrünungselement bzw. dessen zumindest einen mediumdurchströmbaren Körper ausströmen. Hierbei ist ein Rückführen des Mediums, wie von Wasser, in einen Vorratssammelbehälter und nachfolgendes erneutes Einspeisen in den zumindest einen mediumdurchströmbaren Körper des Begrünungselements möglich.

Die zumindest eine Nährstoffe und/oder Fluid aufnehmende Einrichtung ist vorteilhaft zumindest ein offenporiger, geschäumter Kunststoff, also zumindest ein offenporiges Schaummaterial, oder umfasst zumindest einen solchen oder ein solches. Über diese Einrichtung können die Pflanzen mit Nährstoffen und/oder Fluid, wie Wasser, versorgt werden. Durch Ausbilden als offenporiger, geschäumter Kunststoff ist einerseits eine Speicherung von Fluid und Nährstoffen in dessen zahlreichen Poren möglich und andererseits eine problemlose Abgabe von diesen an die Pflanzen. Letztere werden vorzugsweise auf der Außenseite der Einrichtung aus offenporigem, geschäumten Kunststoff angeordnet, so dass sie direkt mit Fluid und Nährstoffen gespeist werden können. Weiter vorteilhaft kann die Einrichtung zumindest eine äußere offenzellige Schaumschicht zum Verkrallen von Pflanzen und zumindest eine innere Schaumschicht umfassen, die dem Speichern von Fluid, wie Wasser, und Nährstoffen dient.

Der offenporige geschäumte Kunststoff kann beispielsweise auf Basis von zumindest einem der Stoffe Polyamid (PA), Polypropylen (PP), Polyethylen (PE), Polyurethan (PUR) und/oder zumindest einem Duroplasten und/oder zumindest einem biobasierten Kunststoff, wie Polylactid (PLA), hergestellt sein. Ferner ist es zusätzlich oder alternativ möglich, dass der offenporige geschäumte Kunststoff, also das Schaummaterial, ein superabsorbierendes Material enthält. Hierdurch kann Fluid besonders gut in dem Schaummaterial festgehalten werden. Vorteilhaft wird dabei darauf geachtet, dass die Pflanzen das im Schaummaterial festgehaltene Fluid aus diesem heraus zur Verfügung gestellt bekommen. Auch andere Materialen, die beim Schäumen eine offenporige bzw. offenzellige Struktur ergeben, können alternativ für die Herstellung der zumindest einen Nährstoffe und/oder Fluid aufnehmenden Einrichtung verwendet werden.

Der mediumdurchströmbare Körper kann beispielsweise als Medienleitung oder ein oder mehrere Medienleitungsabschnitte, insbesondere Rohrleitung oder ein oder mehrere Rohrleitungsabschnitte, ausgebildet sein oder werden. Unter einer Rohrleitung bzw. Rohrleitungsabschnitte(n) werden Medienleitungen und deren Abschnitte mit beliebiger Querschnittsform und beliebigen Abmessungen verstanden. Beispielsweise ist es möglich, den mediumdurchströmbaren Körper als Endlos-Rohrleitung auszubilden und individuell Rohrleitungsabschnitte in der gewünschten Länge abzulängen. Selbstverständlich können alternativ auch unterschiedlich lange mediumdurchströmbare Körper direkt als Rohrleitungsabschnitte gegebenenfalls unterschiedlicher Länge ausgebildet werden.

Weiter vorteilhaft kann der mediumdurchströmbare Körper, insbesondere in Ausbildung als Rohrleitung oder Rohrleitungsabschnitt(e) endseitig mit zumindest einem Verbindungs- oder Schnittstellenabschnitt und/oder zumindest einer Verbindungseinrichtung versehen sein oder werden zum Verbinden mit zumindest einem weiteren mediumdurchströmbaren Körper und/oder zum Verbinden mit zumindest einer Mediumzu- oder -abführeinrichtung, wie z.B. einer Wasserentnahmestelle oder einem Kanal- oder Abwassersystem. Der mediumdurchströmbare Körper kann somit beispielsweise in verschiedene Rohrleitungsabschnitte abgelängt und diese endseitig entweder als Verbindungsabschnitt ausgebildet oder mit Verbindungseinrichtungen, wie Leitungsverbindern, versehen und hierüber mit anderen Rohrleitungsabschnitten und/oder einer Mediumzu- oder -abführeinrichtung verbunden werden. Eine Wasserentnahmestelle ist hier eine Mediumzuführeinrichtung, während ein Abwassersystem eine Mediumabführeinrichtung ist. Der zumindest eine Verbindungs- oder Schnittstellenabschnitt oder die endseitig am Rohrleitungsabschnitt angeordnete Verbindungseinrichtung des mediumdurchströmbaren Körpers kann vorteilhaft an das jeweilige Gegenstück, mit dem der mediumdurchströmbare Körper verbunden werden soll bzw. dessen Verbindungs- oder Schnittstellenabschnitt oder Verbindungseinrichtung angepasst werden. Hierdurch ist ein Koppeln mehrerer mediumdurchströmbarer Körper, insbesondere in Form von Rohrleitungsabschnitten, zu einem Rohrleitungssystem problemlos möglich. Es kann hierüber somit ein Begrünungselement des Begrünungssystems aufgebaut werden, jeweils angepasst an den jeweiligen Anwendungsfall. Durch das Vorsehen der einzelnen Rohrleitungsabschnitte bzw. der Anzahl von mediumdurchströmbaren Körpern, der zumindest einen Mediumzuführeinrichtung und der zumindest einen Mediumabführeinrichtung können beliebige Kombinationen dieser Komponenten vorgenommen, somit unterschiedlichste Begrünungselemente ausgebildet werden. Das Begrünungssystem ist daher ein modulares Begrünungssystem.

Weiter vorteilhaft kann der mediumdurchströmbare Körper mehrschichtig aufgebaut und die Schichten können Funktionsschichten sein, wobei zumindest eine Wasserführungsschicht und/oder zumindest eine Wasserspeicherschicht und/oder zumindest eine Nährstoffspeicherschicht und/oder zumindest eine Schicht zur mechanischen Stabilisierung vorgesehen ist/sind. Die einzelnen Schichten des mediumdurchströmbaren Körpers, insbesondere in Form einer Rohrleitung bzw. eines Rohrleitungsabschnitts, können somit unterschiedliche Funktionen erfüllen, die einer Schicht zur Wasserführung dienen, die z.B. darunterliegende Schicht zur Wasserspeicherung, die z.B. darunterliegende Schicht zur Nährstoffspeicherung und die z.B. darunterliegende Schicht zur mechanischen Stabilisierung. Selbstverständlich können auch noch zahlreiche andere Funktionsschichten vorgesehen werden, die geeignet über- bzw. untereinander angeordnet werden. Hierdurch ist es möglich, über die verschiedenen Schichten des mediumdurchströmbaren Körpers, insbesondere in Form einer Rohrleitung oder eines Rohrleitungsabschnitts, die Pflanzen auf dessen Außenseite mit Wasser zu versorgen, somit das Wasser den Pflanzen ständig zuzuführen, und diese auch mit den erforderlichen Nährstoffen zu versorgen. Durch die Schicht zur mechanischen Stabilisierung ist es möglich, den mediumdurchströmbaren Körper selbsttragend auszubilden. Alternativ hierzu ist das Vorsehen eines Tragkörpers, der dem mediumdurchströmbaren Körper mechanische Stabilität verleiht, möglich. Ist ein solcher Tragkörper vorgesehen, der nicht nur in Form eines Doppel-T-Trägers, sondern insbesondere auch in Form einer Rohrleitung ausgebildet sein kann, kann dieser ganz oder teilweise mit der zumindest einen Nährstoffe und/oder Fluid aufnehmenden Einrichtung ummantelt werden. Das Vorsehen eines solchen Tragkörpers ermöglicht es ferner, den mediumdurchströmbaren Körper gegen Verbiegen und Kriechen besser zu schützen.

Zumindest eine der Schichten des mehrschichtig aufgebauten mediumdurchströmbaren Körpers kann semipermeable sein. Eine solche semipermeable Schicht kann z.B. als Filterschicht zwischen Fluid und geschäumtem Kunststoff angeordnet sein. Hierbei wird vorteilhaft die Abgabe von Wasser bzw. allgemein Fluid und Nährstoffen in Richtung der Pflanzen ermöglicht, die auf der Außenseite des mediumdurchströmbaren Körpers angeordnet werden. Die zumindest eine semipermeable Schicht ist somit zur Abgabe von Wasser bzw. Nährstoffen in Richtung der Pflanzen durchlässig, in der entgegengesetzten Richtung nicht. Hierdurch kann auch ein Eindringen von Schmutz aus Richtung der Pflanzen in den mediumdurchströmbaren Körper hinein, insbesondere die unter der semipermeablen Schicht liegenden Schichten von diesem, verhindert werden.

Der mediumdurchströmbare Körper kann insbesondere als Hohlkörper ausgebildet sein und zumindest ein inneres Durchströmungslumen und zumindest eine dieses umgebende Wandung aufweisen, die zumindest zum Teil oder abschnittsweise von der zumindest einen Nährstoffe und/oder Fluid aufnehmenden Einrichtung umgeben ist und/oder der mediumdurchströmbare Körper kann vollständig aus Schaummaterial aus zumindest einem offenporigen, geschäumten Kunststoff ausgebildet sein. Ferner ist es möglich, zumindest ein inneres Durchströmungslumen des mediumdurchströmbaren Körpers mit Schaummaterial aus zumindest einem offenporigen, geschäumten Kunststoff auszufüllen. In jedem Falle sind ein Fluidtransport und ein Gastransport in Längsrichtung des mediumdurchströmbaren Körpers durch diesen hindurch möglich. Durch das zumindest eine innere Durchströmungslumen des als Hohlkörper ausgebildeten mediumdurchströmbaren Körpers und/oder durch die Poren des Schaummaterials von diesem können Medium in Form von beispielsweise Wasser und/oder Wassernebel und/oder Gas hindurch strömen.

Der mediumdurchströmbare Körper kann beispielsweise einen Außendurchmesser von 2 cm bis 20 cm aufweisen. Die Formgebung des Profils des mediumdurchströmbaren Körpers, insbesondere in Form von einer Rohrleitung oder eines oder mehrerer Rohrleitungsabschnitte, kann rund und/oder mehreckig und/oder oval und/oder unsymmetrisch bzw. unregelmäßig sein. Der mediumdurchströmbare Körper kann auch über seine Längserstreckung hinweg abschnittsweise ein unterschiedliches Profil aufweisen. Dies kann jeweils anwendungsspezifisch geeignet gewählt werden.

Als weiter vorteilhaft erweist es sich, zumindest eine Einrichtung zum Feuchthalten des zumindest einen mediumdurchströmbaren Körpers vorzusehen. Insbesondere kann der mediumdurchströmbare Körper im Innern, beispielsweise endseitig im Innern, mit zumindest einer Ventileinrichtung zur Mediumzulaufsteuerung und/oder zur Mediumauslaufsteuerung zur Steuerung des Zustroms und/oder zum Verhindern eines Ausströmens von Medium aus dem Innern des mediumdurchströmbaren Körpers versehen sein oder werden. Es kann somit beispielsweise eine Ventilklappe endseitig im Innern des mediumdurchströmbaren Körpers, insbesondere in Form einer Rohrleitung oder zumindest eines Rohrleitungsabschnitts, angeordnet werden, um ein ungewolltes Ausströmen von Medium aus dem inneren Durchströmungslumen des mediumdurchströmbaren Körpers zu verhindern. Hierdurch ist ein Feuchthalten des mediumdurchströmbaren Körpers sehr gut möglich. Das Vorsehen einer solchen Ventileinrichtung ist auch im Bereich einer Zuführleitung und/oder Abführleitung, die mit dem zumindest einen mediumdurchströmbaren Körper verbunden ist oder werden kann, möglich. Ferner ist es möglich, diese Wirkung ohne Ventileinrichtung zu erzielen, z.B. durch Vorsehen eines Kreislaufsystems oder durch geeignete Auslegung der Hydrostatik das Begrünungssystem ohne Ventileinrichtung zu betreiben und dennoch den mediumdurchströmbaren Körper feucht zu halten. Beispielsweise ist das Vorsehen einer oder mehrerer Federklappe(n) möglich, durch die ein ungewolltes Ausströmen von Medium aus dem inneren Durchströmungslumen verhindert werden kann.

Der mediumdurchströmbare Körper kann weiter vorteilhaft zumindest eine außenseitige Trageinrichtung zum Tragen von Pflanzen und/oder zum Anordnen zumindest einer Beleuchtungseinrichtung, zumindest eines Solarmoduls, zumindest einer Werbeeinrichtung aufweisen. Insbesondere kann die Trageinrichtung zumindest ein außenseitig an dem mediumdurchströmbaren Körper angeordnetes Lochblech oder Drahtgitter sein. Der mediumdurchströmbare Körper kann beispielsweise den Tragkörper und beabstandet dazu die außenseitige Trageinrichtung insbesondere in Form zumindest eines Lochblechs aufweisen, wobei der Tragkörper und die außenseitige Trageinrichtung bzw. das zumindest eine Lochblech durch ein oder mehrere Trennstege voneinander beanstandet sind. In den durch die Trennstege, den Tragkörper und die außenseitige Trageinrichtung gebildeten Ringsegmenten bzw. Segmenten kann die zumindest eine Nährstoffe und/oder Fluid aufnehmende Einrichtung angeordnet werden, so dass auf der Außenseite des mediumdurchströmbaren Körpers in diesem Ringsegment oder Segment Pflanzen aufwachsen können. In dem oder den Ringsegmenten, in dem oder denen keine Nährstoffe und/oder Fluid aufnehmende Einrichtung angeordnet ist, kann auf der Außenseite der Trageinrichtung z.B. zumindest eine LED als Beleuchtungseinrichtung und/oder zumindest eine Solarzelle zur Energieerzeugung und/oder Werbung angeordnet werden.

Um den mediumdurchströmbaren Körper in Richtung der Außenseite eines Gebäudes oder einer Fassade oder eines Wandelements ausrichten zu können, erweist es sich als weiter vorteilhaft, zumindest eine Antriebseinrichtung zum gezielten Ausrichten des mediumdurchströmbaren Körpers vorzusehen. Eine solche Antriebseinrichtung kann an einem Ende des mediumdurchströmbaren Körpers angeordnet und beispielsweise durch einen elektrischen Antrieb drehangetrieben werden. Hierdurch können wahlweise das begrünte Segment, ein mit zumindest einem Solarmodul versehenes Segment, ein mit einer Beleuchtungseinrichtung versehenes Segment, ein mit Werbung versehenes Segment in Richtung nach außen, somit zum Tageslicht bzw. auf die Außenseite eines Gebäudes, einer Fassade, eines Wandelements etc. gedreht werden.

Das Begrünungssystem kann, wie bereits erwähnt, modular aufgebaut sein und eine Anzahl von mediumdurchströmbaren Körpern in Form von Rohrleitungsabschnitten umfassen, die lösbar miteinander verbindbar oder verbunden sind. Insbesondere können die Rohrleitungsabschnitte steckbar miteinander lösbar verbindbar oder verbunden sein. Die Rohrleitungsabschnitte können grundsätzlich auch druckbelastet werden oder sein, so dass bei Vorsehen einer solchen lösbaren Verbindung insbesondere in Form einer Steckverbindung dies durch geeignete Wahl von Steckverbindern berücksichtigt wird, über die die einzelnen Rohrleitungsabschnitte miteinander verbunden werden können.

Das Begrünungssystem kann als autarke Einheit ausgebildet sein und die zumindest eine Mediumzuführeinrichtung, insbesondere eine Wasserversorgungseinrichtung, zumindest eine Pumpeinrichtung zum Fördern von Medium zu dem zumindest einen mediumdurchströmbaren Körper des zumindest einen Begrünungselements und zumindest eine Energieversorgungseinrichtung zum Versorgen der Pumpeinrichtung mit Energie, insbesondere auf Basis von Photovoltaik und/oder Windkraft, umfassen. Dies erweist sich besonders bei einem vertikal aufgestellten Begrünungssystem als vorteilhaft, bei denen ein Pumpen von Fluid, wie Wasser, zu den mediumdurchströmbaren Körpern des oder der Begrünungselemente erforderlich ist. Insbesondere durch Speisen durch eine Photovoltaikanlage oder über eine z.B. Mikro-Windanlage kann die zumindest eine Pumpeinrichtung autark mit Strom versorgt werden, so dass ein Einspeisen von Wasser in den zumindest einen mediumdurchströmbaren Körper permanent sichergestellt werden kann. Die Wasserversorgung kann durch Regenwasser, somit beispielsweise Anschluss zumindest eines mediumdurchströmbaren Körpers an eine Regenrinne, Wasser aus einem Bodenbereich, beispielsweise einem Kanalsystem, und/oder aus einer Zisterne erfolgen. Bei der Entnahme von Wasser aus dem Bodenbereich bzw. einer Zisterne oder einer anderen Art eines Wasserspeichers ist es üblicherweise erforderlich, zumindest eine Pumpeinrichtung vorzusehen, um das Wasser nach oben zu befördern zu dem zumindest einen obersten mediumdurchströmbaren Körper des Begrünungssystems. Ferner ist auch eine Bewässerung mittels Grauwassers möglich, wobei Grauwasser dem zumindest einen mediumdurchströmbaren Körper des Begrünungsystems zugeführt wird. Ferner ist auch ein Anschluss des Begrünungssystems an ein Retentionsdach möglich, so dass hierüber ein Einspeisen von Wasser in den zumindest einen mediumdurchströmbaren Körper des Begrünungssystems erfolgen kann.

Zum Verhindern eines Verstopfens oder Zusetzens des zumindest einen mediumdurchströmbaren Körpers des zumindest einen Begrünungselementes oder einer Pumpeinrichtung des Begrünungssystems ist es möglich, zumindest ein Filterelement zum Filtern des zuströmenden Fluids, wie z.B. Regenwassers, vorzusehen. Das Filterelement kann z.B. im Bereich der Mediumzuführeinrichtung, wie einer Zuführleitung, vorgesehen sein oder werden. Das zumindest eine Filterelement filtert hierbei Schwebstoffe, die die Pumpeinrichtung, aber auch die Poren des offenporigen geschäumten Kunststoffs des mediumdurchströmbaren Körpers zusetzen können, heraus. Selbstverständlich ist es grundsätzlich auch möglich, kein Filterelement vorzusehen.

Weiter vorteilhaft können in der Betriebsposition, also der zumeist im Wesentlichen vertikalen Position, des Begrünungselements im Raum der zumindest eine mediumdurchströmbare Körper in horizontaler und/oder vertikaler Ausrichtung und/oder zumindest einem Winkel zur Vertikalen angeordnet sein. Es ist somit möglich, den oder die mediumdurchströmbaren Körper nicht nur in vertikaler und/oder horizontaler Richtung anzuordnen, sondern auch in einem Winkel zur Vertikalen, wodurch ein Gefälle erzeugt wird, das weniger stark als bei einem vertikalen Anordnen des oder der mediumdurchströmbaren Körper ist. Über die Wahl des Neigungswinkels des oder der mediumdurchströmbaren Körper kann insbesondere auch die Verweildauer des Mediums, wie Fluids oder Gases, in dem mediumdurchströmbaren Körper eingestellt werden.

Weiter vorteilhaft können die Pflanzen auf der Außenseite des zumindest einen mediumdurchströmbaren Körpers über die Kapillarwirkung des offenporigen geschäumten Kunststoffs mit Wasser versorgt werden. Ebenfalls ist es möglich, die Wasserversorgung der Pflanzen oder Pflanzenschicht, die auf der Außenseite des zumindest einen mediumdurchströmbaren Körpers angeordnet sind oder werden, über Kapillarwirkung von Steigrohren zu realisieren, wobei insbesondere das zumindest eine innere Durchströmungslumen des zumindest einen mediumdurchströmbaren Körpers als ein solches Steigrohr dient. Der zumindest eine mediumdurchströmbare Körper ist in diesem Falle insbesondere vertikal in Bezug auf die Betriebsposition des Begrünungselements und die Raumausrichtung im den mediumdurchströmbaren Körper und das Begrünungselement umgebenden dreidimensionalen Raum angeordnet.

Ferner ist es möglich, das zumindest eine Begrünungselement und/oder dessen zumindest einen mediumdurchströmbaren Körper starr an einem Gebäude bzw. dessen Fassade oder einem Wandelement zu befestigen. Ebenfalls ist es möglich, das zumindest eine Begrünungselement und/oder dessen zumindest einen mediumdurchströmbaren Körper beweglich an einem Gebäude bzw. dessen Fassade oder einem Wandelement zu befestigen. Ein starres Befestigen an einer Fassade oder einem Wandelement kann beispielsweise durch Vorsehen einer Anzahl von parallel zueinander verlaufenden mediumdurchströmbaren Körpern, die horizontal übereinander, miteinander fluidverbunden angeordnet sind, erfolgen. Ein erster mediumdurchströmbarer Körper kann an eine Regenrinne angeschlossen und ein letzter mediumdurchströmbarer Körper an ein Kanalsystem angeschlossen werden. Die fluid- bzw. strömungsverbundenen mediumdurchströmbaren Körper können somit fest vor oder an der Fassade oder einem Wandelement eines Gebäudes installiert werden, wobei die einzelnen mediumdurchströmbaren Körper starr, also unbeweglich, dort befestigt sein können. Es kann ein selbsttragender Aufbau über z.B. eine Stahlträgerprofilkonstruktion als Fassadenvorbau realisiert werden. Eine Befestigung an der Fassade selbst kann lediglich zur Stabilisierung vorgesehen werden, nicht jedoch zum eigentlichen Befestigen des Begrünungssystems. Letzteres ist selbsttragend ausgebildet, steht somit von selbst und benötigt keine weitere Befestigung an der Fassade eines Gebäudes. Die einzelnen mediumdurchströmbaren Körper können untereinander zu einem oder mehreren Begrünungselement(en) verbunden sein, das oder die Eigenstabilität aufweist/aufweisen und somit lediglich über eine Zuführleitung an eine Regenrinne und über eine Abführleitung an ein Kanalsystem angeschlossen wird/werden.

Ein Beispiel für ein bewegliches Befestigen des zumindest einen Begrünungselements bzw. von dessen zumindest einem mediumdurchströmbaren Körper an einem Gebäude bzw. dessen Fassade oder einem Wandelement ist das Vorsehen des Begrünungssystems in Form eines Beschattungssystems, das vor einem oder mehreren Fenstern eines Gebäudes angeordnet wird, wobei Lamellen des Begrünungselements mit zumindest einem mediumdurchströmbaren Körper versehen oder als ein solcher ausgebildet sind oder werden. Die Lamellen sind beweglich, so dass dementsprechend der zumindest eine mediumdurchströmbare Körper, der eine Lamelle bildet oder mit dem die Lamelle versehen ist, beweglich an dem Gebäude bzw. dessen Fassade oder Wandelement, insbesondere vor einem Fenster des Gebäudes, befestigt wird bzw. ist. Die Lamellen des Beschattungssystems bzw. Begrünungselements können über Medienleitungen, insbesondere Schläuche, miteinander und/oder mit zumindest einer Mediumquelle des Begrünungssystems fluidverbunden sein oder werden. Die Medienleitung kann zur Wassereinspeisung beispielsweise an eine Regenrinne oder ein Retentionsdach eines Gebäudes angeschlossen werden. Selbstverständlich ist auch die Zufuhr von Wasser aus dem Bodenbereich und/oder einer Zisterne oder einem anderen Wasserspeicher und/oder die Zufuhr von Grauwasser, wie vorstehend bereits beschrieben, möglich.

Das zumindest eine Begrünungselement kann nicht nur an einem Wandelement oder einer Fassade eines Gebäudes angeordnet werden, sondern auch als zumindest ein Fassadenelement oder Wandelement eines Gebäudes ausgebildet werden. Auch hierbei ist ein Fluidverbinden mit der zumindest einen Mediumzuführeinrichtung, beispielsweise einer Regenrinne, zur Zufuhr von Medium, wie Wasser, einerseits und andererseits der zumindest einen Mediumabführeinrichtung, z.B. einem Kanalsystem im Bodenbereich, zur Abfuhr von Medium, wie Wasser, möglich. Beispielsweise kann das zumindest eine Begrünungselement als Wandelement eines Pavillons dienen oder ein Wandelement eines Pavillons mit zumindest einem solchen Begrünungselement versehen werden.

Ein Feuchthalten des zumindest einen mediumdurchströmbaren Körpers des Begrünungssystems ist beispielsweise durch Vorsehen einer Abschotteinrichtung, die einen Austritt des Mediums aus dem mediumdurchströmbaren Körper und/oder der Mediumabführeinrichtung verhindert, möglich. Beispielsweise kann eine solche Abschotteinrichtung in Form einer Ventileinrichtung im Bodenbereich, also dort, wo das Medium aus dem Begrünungselement austritt und in den Bodenbereich mündet, vorgesehen werden. Die Ventileinrichtung kann beispielsweise ein Ducktail oder ein Membranventil sein. Ferner kann, wie bereits vorstehend beschrieben, auch im Bereich der Mediumzuführeinrichtung eine Ventileinrichtung, Federklappe(n) oder eine andere Einrichtung vorgesehen werden, um auch im Bereich der Mediumzuführeinrichtung eine Steuerungsmöglichkeit für die Zufuhr von Medium zu schaffen.

Zur näheren Erläuterung der Erfindung werden im Folgenden Ausführungsbeispiele von dieser näher anhand der Zeichnungen beschrieben. Diese zeigen in:
- Figur 1: eine Querschnittsansicht eines erfindungsgemäßen mediumdurchströmbaren Körpers,
- Figur 2: eine Längsschnittansicht des mediumdurchströmbaren Körpers gemäß Figur 1, geschnitten entlang der Linie A-A,
- Figur 3: eine Längsschnittansicht durch eine zweite Ausführungsform eines erfindungsgemäßen mediumdurchströmbaren Körpers,
- Figur 4: eine perspektivische Ansicht eines erfindungsgemäßen Begrünungselements in Ausgestaltung als Beschattungssystem, das mit als Lamellen ausgebildeten erfindungsgemäßen mediumdurchströmbaren Körpern versehen ist,
- Figur 5: eine Frontansicht von über einem Fenster eines Gebäudes horizontal angeordneten, als Lamellen ausgebildeten, erfindungsgemäßen mediumdurchströmbaren Körpern eines erfindungsgemäßen Begrünungssystems,
- Figur 6: eine perspektivische Ansicht eines Gebäudes, das mit einem erfindungsmäßen Begrünungselement vor seiner Fassade versehen ist, welches mehrere parallel übereinander horizontal angeordnete erfindungsgemäße mediumdurchströmbare Körper, die einerseits an eine Regenrinne des Gebäudes und andererseits an ein Kanalsystem angeschlossen sind, umfasst,
- Figur 7: eine perspektivische Ansicht eines Pavillons, der mit einer weiteren Ausführungsform eines erfindungsgemäßen Begrünungselements mit horizontal übereinander angeordneten erfindungsgemäßen mediumdurchströmbaren Körpern versehen ist,
- Figur 7a: eine Seitenansicht des Pavillons gemäß Figur 7,
- Figur 8: eine Prinzipskizzenansicht einer Mediumzuführeinrichtung eines erfindungsgemäßen Begrünungssystems mit einer Anzahl von mit erfindungsgemäßen mediumdurchströmbaren Körpern versehenen Begrünungselementen, einer Pumpeinrichtung zum Fördern von Wasser aus einem Wasserspeicher und Solarmodulen, über die die Pumpeinrichtung mit Energie versorgt wird,
- Figur 9a: eine perspektivische Ansicht eines als vertikale Lamelle ausgebildeten erfindungsgemäßen mediumdurchströmbaren Körpers mit endseitigem Abschlussdeckel und außenseitiger Freifläche zum Versehen mit Beleuchtung, Solarzellen, Werbung etc.,
- Figur 9b: eine Querschnittsansicht durch den erfindungsgemäßen mediumdurchströmbaren Körper gemäß Figur 9a, und
- Figur 10: eine Detailansicht eines erfindungsgemäßen mediumdurchströmbaren Körpers mit endseitiger Antriebseinrichtung und Schnellverbindungseinrichtung, über die der mediumdurchströmbare Körper an ein Verteilerrohr angeschlossen ist.

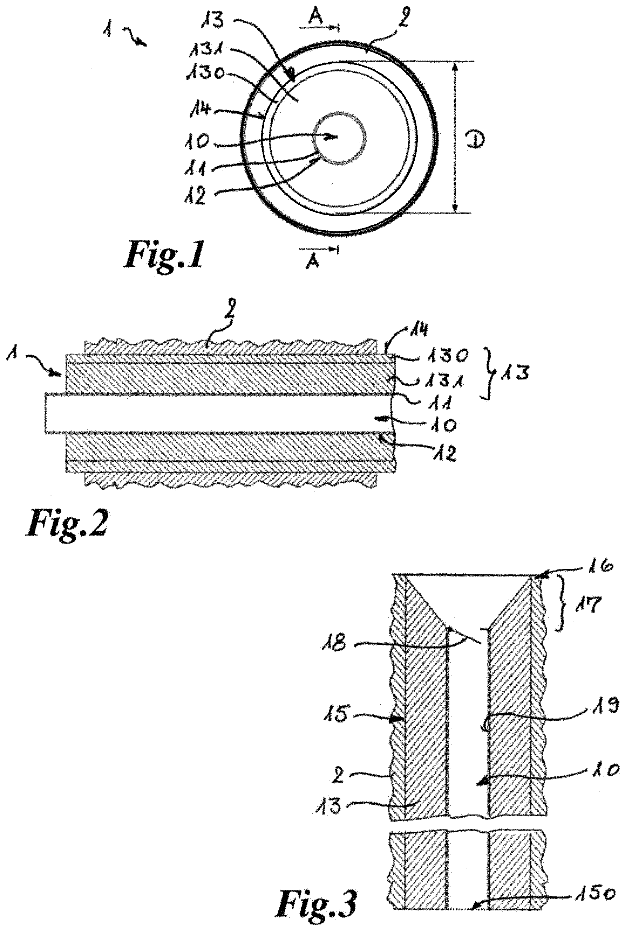

Die Figuren 1 und 2 zeigen einen mediumdurchströmbaren Körper 1 in Form einer Rohrleitung. Der mediumdurchströmbare Körper 1 weist ein inneres Durchströmungslumen 10 auf, das von einem Medium, wie einem Fluid und/oder Gas, durchströmt werden kann. Das innere Durchströmungslumen 10 wird von einem mechanische Stabilität verleihenden Tragkörper 11 umgrenzt, wobei der Tragkörper 11 hier in Form einer Rohrleitung ausgebildet ist. Auf der Außenseite 12 des Tragkörpers 11 ist eine Nährstoffe und/oder Fluid aufnehmende Einrichtung 13 als Schicht zur Mediumspeicherung angeordnet. Das Medium kann hier beispielsweise Wasser sein. Die Nährstoffe und/oder Fluid aufnehmende Einrichtung oder Schicht 13 ist aus zumindest einem offenporigen, geschäumten Kunststoff, somit aus einem offenporigen Schaummaterial, ausgebildet. Auf der Außenseite 14 des mediumdurchströmbaren Körpers 1 und somit der Einrichtung bzw. Schicht 13 ist eine Pflanzenschicht 2 aufgewachsen bzw. angeordnet, die sich aufgrund des Vorsehens des offenporigen Kunststoffmaterials der Einrichtung bzw. Schicht 13 auf dieser besonders gut anlagern und festhalten kann.

Der Tragkörper 11 kann aus einem Material bestehen, das durchlässig insbesondere für Fluid ist, um die darüber angeordnete Einrichtung bzw. Schicht 13 mit Fluid, insbesondere Wasser, zu versorgen. Der Tragkörper 11 kann auch nicht wasserdurchlässig ausgebildet sein, z.B. als T-Träger, Doppel-T-Träger oder andere Art eines Tragkörpers. Er kann ferner z.B. als geschlossene Rohrleitung lediglich dem Zu- und Ablauf von Medium dienen. Ferner kann er sich auch lediglich durch einen Teilabschnitt der Nährstoffe und/oder Fluid aufnehmenden Einrichtung 13 oder Schicht in Form des Schaumkörpers erstrecken. Letztere(r) kann zumindest eine äußere offenzellige Schaumschicht 130 zum Verkrallen der Pflanzen und zumindest eine innere Schaumschicht 131 umfassen, die dem Speichern von Fluid, wie Wasser, und Nährstoffen dient (siehe Figur 1 und 2). Die äußere Schaumstoffschicht 130 kann vorzugsweise aus Polypropylen (PP) oder zumindest einem biobasierten Kunststoff, wie Polylactid (PLA), bestehen. Die innere Schaumschicht 131 kann z.B. aus Polyurethan (PUR) oder einem anderen Schaummaterial bestehen.

Die auf der Außenseite 14 des mediumdurchströmbaren Körpers 1 angeordnete Pflanzenschicht 2 wird über die Einrichtung 13 bzw. innere Schaumschicht 131 mit Nährstoffen und/oder Fluid, also insbesondere Wasser oder einer wässrigen Lösung, die z.B. durch den Tragkörper 11 strömen kann, versorgt. Die Einrichtung 13 oder innere Schaumschicht 131 und äußere Schaumschicht 130 kann/können vollständig den Tragkörper 11 umschließen. Ebenfalls ist es möglich, dass die Einrichtung 13 oder innere bzw. äußere Schaumschicht 131 bzw. 130 den Tragkörper 11 lediglich teilweise umgibt.

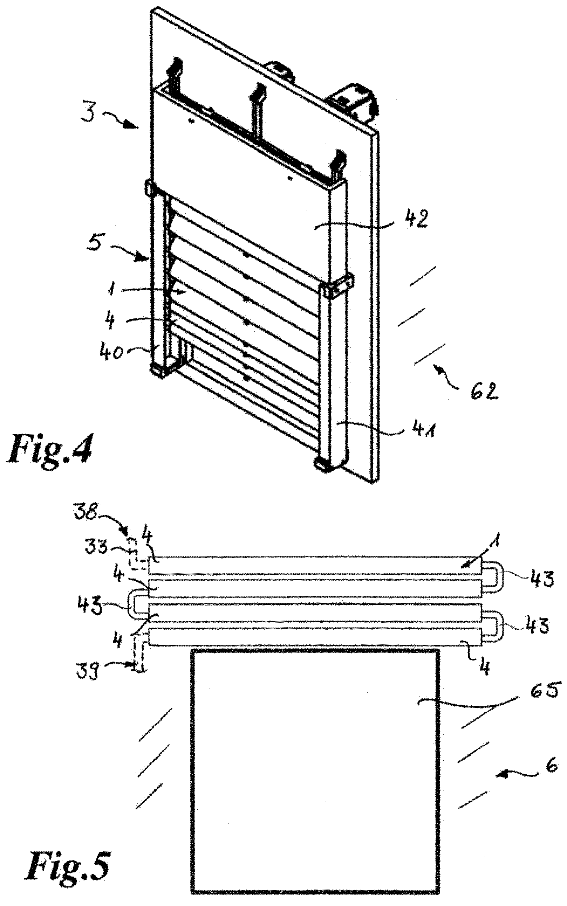

Der mediumdurchströmbare Körper 1 dient als Träger für die Pflanzenschicht 2 und kann in Raumrichtung sowohl vertikal als auch horizontal als auch in einem Winkel zur Vertikalen angeordnet werden. Dies ist insbesondere den Figuren 4 bis 7a zu entnehmen, auf die nachfolgend noch eingegangen wird.

Der mediumdurchströmbare Körper 1 kann auch ohne den Tragkörper 11 vorgesehen werden, wobei die Nährstoffe und/oder Fluid aufnehmende Einrichtung 13 in diesem Falle selbsttragend ausgebildet wird. Diese weist in diesem Falle eine ausreichende mechanische Stabilität auf, so dass auf das Vorsehen eines zusätzlichen, unter dieser im Inneren des mediumdurchströmbaren Körpers 1 angeordneten Tragkörper 11 verzichtet werden kann. Wie bereits vorstehend erwähnt, kann sich dieser zur Zu- und Abfuhr von Medium auch lediglich über einen Teilabschnitt des mediumdurchströmbaren Körpers 1 erstrecken.

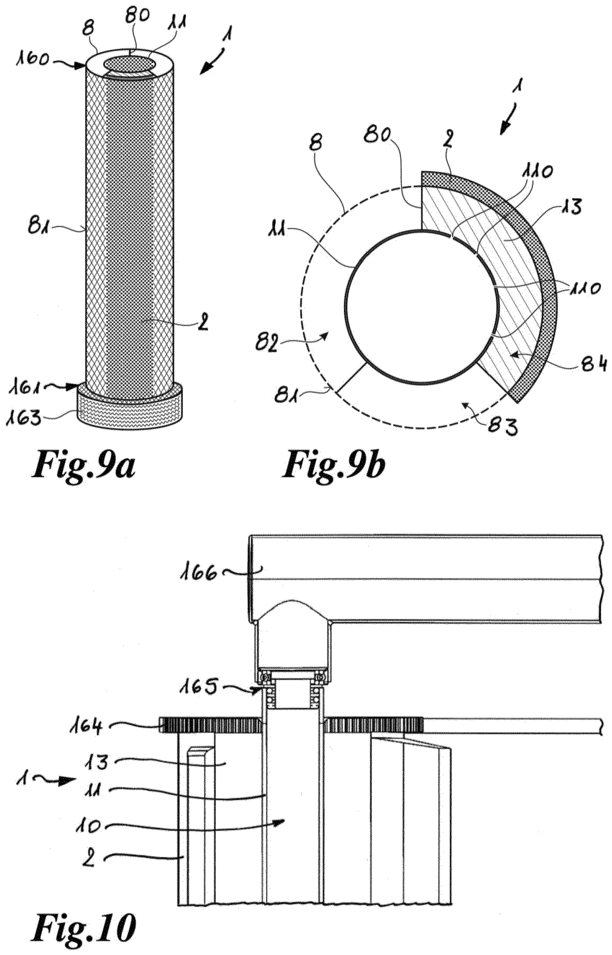

Ferner ist es möglich, den mediumdurchströmbaren Körper 1 mehrschichtig aufzubauen, wobei verschiedene Funktionsschichten übereinander angeordnet werden. Beispielsweise kann als innerste Schicht, die das Durchströmungslumen 10 umgibt, eine mechanische Stabilität verleihende Schicht, sofern kein Tragkörper 11 vorgesehen wird, vorgesehen werden, ferner eine Nährstoffspeicherschicht, eine Fluidspeicherschicht und eine Fluidführungsschicht. Auch weitere Funktionsschichten können vorgesehen werden. Ferner ist es einerseits möglich, das innere Durchströmungslumen 10 als Hohlraum zum Durchströmen mit Fluid, wie Wasser, in der in den Figuren 1 und 2 gezeigten Ausführungsform offen zu halten. Ebenfalls ist es möglich, dieses mit Schaummaterial und/oder z.B. saugfähigem Granulat (siehe Figuren 9a, 9b) auszufüllen, durch das Fluid und/oder Gas bzw. allgemein Medium strömen kann.

Der offenporige geschäumte Kunststoff der Einrichtung 13 oder inneren bzw. äußeren Schaumschicht 131 bzw. 130 kann Superabsorbermaterial enthalten, um noch besser Fluid speichern zu können. Da Superabsorbermaterial eigentlich zur Speicherung von Flüssigkeiten und zum Verhindern einer Abgabe geschaffen wurde, ist vorteilhaft zumindest eine Einrichtung zum Ermöglichen und/oder Verbessern einer Abgabe des im Superabsobermaterial gespeicherten Fluides an die Pflanzen vorgesehen. Der offenporige, geschäumte Kunststoff, also das offenporige Schaummaterial, kann beispielsweise auf Basis von Polyamid (PA), Polypropylen (PP), Polyethylen (PE), Polyurethan (PUR) oder zumindest einem Duroplasten oder zumindest einem biobasierten Kunststoff, wie Polylactid (PLA), hergestellt sein. Auch andere Polymere, die im geschäumten Zustand offenporig sind, können hier Verwendung finden. Auch die Kombination mehrerer Schaummaterialien ist möglich, insbesondere bei Ausbilden eines mehrschichtigen mediumdurchströmbaren Körpers 1. Die einzelnen Schichten oder zumindest eine der Schichten kann auch als semipermeable Schicht ausgebildet werden, also lediglich in eine Richtung für insbesondere Wasser durchlässig sein. Hierdurch wird in der anderen Richtung eine Barriere geschaffen, so dass insbesondere ein Durchtritt von Wasser nur in einer Richtung ermöglicht wird. Die Durchtrittsrichtung ist vorteilhaft die in Richtung der Pflanzenschicht 2 auf der Außenseite 14 des mediumdurchströmbaren Körpers bzw. der Nährstoffe und/oder Fluid aufnehmenden Einrichtung 13. Beispielsweise kann eine solche semipermeable Schicht als Filterschicht zwischen dem inneren Durchströmungslumen 10 und der Nährstoffe und/oder Fluid aufnehmenden Einrichtung 13 in Form zumindest eines geschäumten Kunststoffs angeordnet werden.

Der Außendurchmesser D des mediumdurchströmbaren Körpers 1 in Ausgestaltung als Rohrleitung bzw. mit einem inneren Tragkörper 11 in Ausgestaltung als Rohrleitung, wie in den Figuren 1 und 2 dargestellt, kann beispielsweise 2 cm bis 20 cm betragen. Auch andere Abmessungen sind möglich, wobei sich der Bereich von 2 bis 20 cm als besonders vorteilhaft im Hinblick auf Wassertransport, Gewicht und Pflanzenbewuchs erweist.

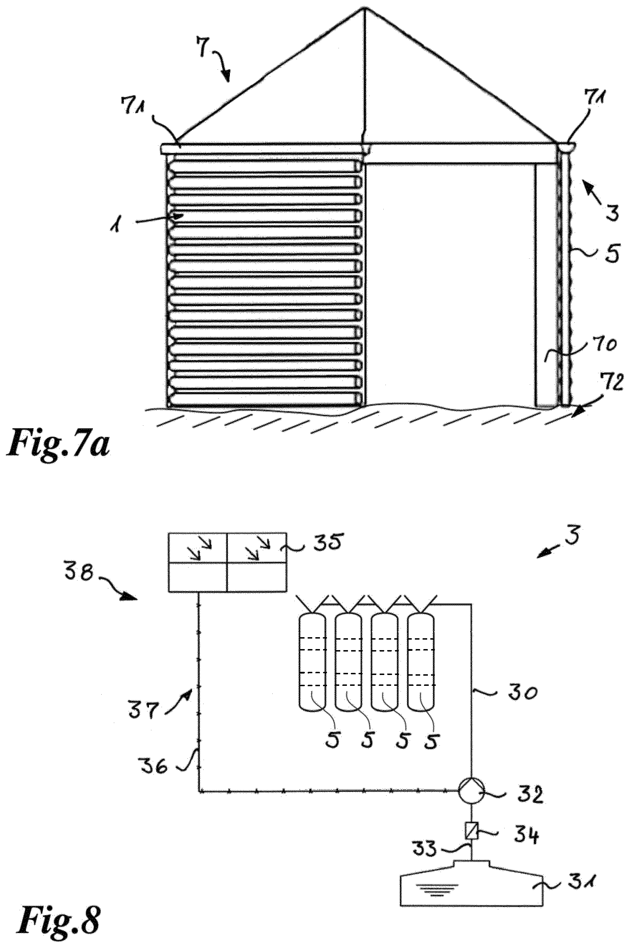

Anstelle der kreisrunden Form des als Rohrleitung ausgebildeten mediumdurchströmbaren Körpers 1 gemäß Figur 1 und 2 kann dieser bzw. diese im Profil auch oval und/oder mehreckig und/oder unsymmetrisch oder unregelmäßig geformt ausgebildet werden. Der mediumdurchströmbare Körper 1 kann somit jeweils angepasst an die jeweilige Anwendung geeignet geformt werden. Entlang seiner Längserstreckung kann der mediumdurchströmbare Körper 1 auch abschnittsweise unterschiedliche Profilquerschnitte und auch unterschiedliche Abmessungen aufweisen. Ein mehreckiges Profil eröffnet die Möglichkeit, einzelne Flächen unterschiedlich zu nutzen, also z.B. bei einem Dreiecksprofil zwei der drei Seiten zu begrünen und eine bzw. die dritte Seite mit einer oder mehreren Solarzellen zu versehen zum Nutzen für die Einspeisung in eine Photovoltaikanlage und somit zum Zurverfügungstellen von elektrischer Energie zum Speisen z.B. einer Pumpeinrichtung 32, wie sie in Figur 8 gezeigt ist, die dem Rückführen von Medium aus einem Bodenbereich zu einem mediumdurchströmbaren Körper 1 oder einem Fördern von Medium aus einem Speicher zu einem in Raumrichtung als höher gelegenen mediumdurchströmbaren Körper 1 dient.

An der offenzelligen Oberfläche der zumindest einen äußeren Schaumschicht 130 bzw. der Einrichtung 13 können sich die Pflanzen zum Ausbilden der Pflanzenschicht 2 sehr gut festhalten und hierüber deren Ernährung erfolgen. Die Pflanzen der Pflanzenschicht 2 können über den mediumdurchströmbaren Körper 1 somit vollständig mit Wasser und/oder Nährstoffen versorgt werden, wobei entweder lediglich Wasser zusammen mit Nährstoffen durch den mediumdurchströmbaren Körper 1, insbesondere dessen Tragkörper 11, strömt und über die Nährstoffe und/oder Fluid aufnehmende Einrichtung 13 auf die Außenseite des mediumdurchströmbaren Körpers 1 zu den Pflanzen der Pflanzenschicht 2 gelangt oder bei Weglassen des Tragkörpers 11 durch die einzelnen Schichten des ggf. mehrschichtigen mediumdurchströmbaren Körpers 1, zumindest jedoch durch dessen Nährstoffe und/oder Fluid aufnehmende Einrichtung 13, zu den Pflanzen der Pflanzenschicht 2 gelangt.

Insbesondere beim Herstellen eines mediumdurchströmbaren Körpers 1 in Form einer Rohrleitung kann diese in gewünschte Rohrleitungsabschnitte individuell abgelängt werden. Die einzelnen Rohrleitungsabschnitte können nachfolgend individuell geeignet miteinander oder mit Zuführleitungen zum Zuführen von Medium, wie Wasser und Nährstoffen verbunden werden. Ein solches Verbinden kann beispielsweise durch Steckverbinden erfolgen. Dementsprechend können die durch Ablängen erzeugten Rohrleitungsabschnitte endseitig mit geeigneten Verbindungs- oder Schnittstellenabschnitten oder Leitungsverbindern versehen werden, um die einzelnen Rohrleitungsabschnitte zu einem Rohrsystem zu fügen oder mit Mediumzu- oder -abführeinrichtungen zu verbinden, wie beispielsweise einer Wasserentnahmestelle oder einem Abwassersystem.

In Figur 3 ist ein solcher Rohrleitungsabschnitt 15 gezeigt. Dieser weist an seinem Ende 16 einen im Inneren trichterförmig ausgebildeten Abschnitt 17 und in dem trichterförmigen Abschnitt 17 eine Ventilklappe 18 als Ventileinrichtung auf. Diese ist so auf der Innenseite 19 des Rohrleitungsabschnitts 15 bzw. von dessen Nährstoffe und/oder Fluid aufnehmenden Einrichtung 13 angeordnet, dass die Ventilklappe 18 im Zulauf über Federkraft schließt, um ein Austrocknen auch bei geringen Wasserständen im Innern zu vermeiden. Sie öffnet nach innen in das innere Durchströmungslumen 10 hinein, so dass ein Einströmen von Medium, wie Wasser, in das innere Durchströmungslumen 10 des Rohrleitungsabschnitts 15 ermöglicht wird. Nach Schließen der Ventilklappe 18 kann Feuchtigkeit bzw. Wasser im Inneren des Rohrleitungsabschnitts 15 bzw. ganz allgemein des mediumdurchströmbaren Körpers 1 gehalten werden. Somit ist ein Feuchthalten des Rohrleitungsabschnitts 15 und somit ein Aufrechterhalten der Wasserversorgung der Pflanzenschicht 2 auf dessen Außenseite möglich. Am anderen Ende des Rohrleitungsabschnitts 15 oder von weiteren mit diesem verbundenen Rohrleitungsabschnitten 15 kann beispielsweise ebenfalls eine Ventileinrichtung, insbesondere eine Ventilklappe wie die Ventilklappe 18, angeordnet werden, um einen Austritt von Wasser aus dem inneren Durchströmungslumen 10 des Rohrleitungsabschnitts 15 heraus zu verhindern und so eine ausreichende Menge an Wasser in dem oder den Rohrleitungsabschnitten 15 zu halten, so dass dauerhaft die Pflanzenschicht 2 auf der Außenseite des oder der Rohrleitungsabschnitte 15 mit Wasser und Nährstoffen versorgt werden kann. Anstelle des Vorsehens der Ventilklappe 18 kann z.B. ein Kreislaufsystem oder die Hydrostatik des Begrünungssystems so ausgelegt werden, dass das Medium im Innern des zumindest einen Rohrleitungsabschnitts 15 gehalten wird.

Insbesondere kann auch im Bereich einer an den Rohrleitungsabschnitt 15 angeschlossenen Medienleitung, die in einen Bodenbereich 61 vor oder unter einem Gebäude 6 hineinführt, um das aus dem Rohrleitungsabschnitt 15 austretende Medium, wie Wasser, dorthin abzuführen, mit einer entsprechenden Ventileinrichtung versehen werden. Eine solche Ventileinrichtung 150 kann beispielsweise ein Ducktail oder ein Membranventil sein, wie in Figur 3 endseitig an dem Rohrleitungsabschnitt 15 angedeutet..

In Figur 4 ist ein Begrünungselement 5 eines Begrünungssystems 3 gezeigt, das hier als Beschattungssystem zum Beschatten eines Fensters 65 eines Gebäudes 6 ausgebildet ist. Das Begrünungselement 5 umfasst hier beispielsweise acht Lamellen 4, die jeweils einen mediumdurchströmbaren Körper 1 enthalten, um begrünt werden zu können. Die Anzahl an Lamellen 4 kann anwendungsspezifisch geeignet gewählt werden. Die Lamellen dienen zum Beschatten und sind endseitig aufgenommen in zwei etwa parallel zueinander angeordneten Führungsschienen 40, 41. Die beiden Führungsschienen 40, 41 miteinander verbindend ist oberhalb der Lamellen 4 ein Blendenelement 42 vorgesehen, das Verstelleinrichtungen etc. zum Betätigen und Verstellen der Lamellen 4 abdeckt. Um die einzelnen Lamellen 4 untereinander fluidzuverbinden, können diese über Medienleitungen z.B. in Form von Schläuchen 43, wie in Figur 5 angedeutet, miteinander fluidverbunden werden. Anstelle von Schläuchen können auch fluidische Verbinder vorgesehen sein, z.B. Kupferrohrverbinder oder andere Arten von Verbindern. Eine in Raumrichtung oberste Lamelle 4 kann über eine Zuführleitung 33 einer Mediumzuführeinrichtung 38, wie sie beispielhaft in Figur 8 gezeigt ist, mit Fluid, insbesondere Wasser, versorgt werden. Das Fluid bzw. Wasser strömt in die erste Lamelle 4 hinein und durch diese hindurch, über den Schlauch 43 am anderen Ende der Lamelle 4 in die darunterliegende zweite Lamelle 4 hinein, durch diese hindurch bis zum Schlauch 43 am anderen Ende der zweiten Lamelle 4, durch diesen hindurch in die darunter angeordnete dritte Lamelle 4, durch diese hindurch bis zu deren gegenüberliegenden Ende, an diesem in einen weiteren dort angeordneten Schlauch 43 und aus diesem in eine unter der dritten Lamelle 4 angeordnete vierte Lamelle 4. Nach dem Durchströmen auch dieser vierten Lamelle 4 kann das Fluid, wie Wasser, am anderen Ende von dieser in eine Mediumabführeinrichtung 39 austreten. Letztere kann eine Medienleitung umfassen, die beispielsweise in den Bodenbereich 61 vor dem Gebäude 6 mündet, was in Figur 5 jedoch nicht gezeigt ist. Anstelle dieser Serienschaltung kann auch eine Parallelschaltung der Lamellen 4 vorgesehen werden oder eine Mischform aus Serien- und Parallelschaltung. In Figur 5 sind die beispielhaft gezeigten vier Lamellen 4 etwa horizontal und übereinander über einem angedeuteten Fenster 65 des nur angedeuteten Gebäudes 6 angeordnet. Anstelle dessen können auch eine andere Anzahl und Anordnung von Lamellen 4 vorgesehen sein.

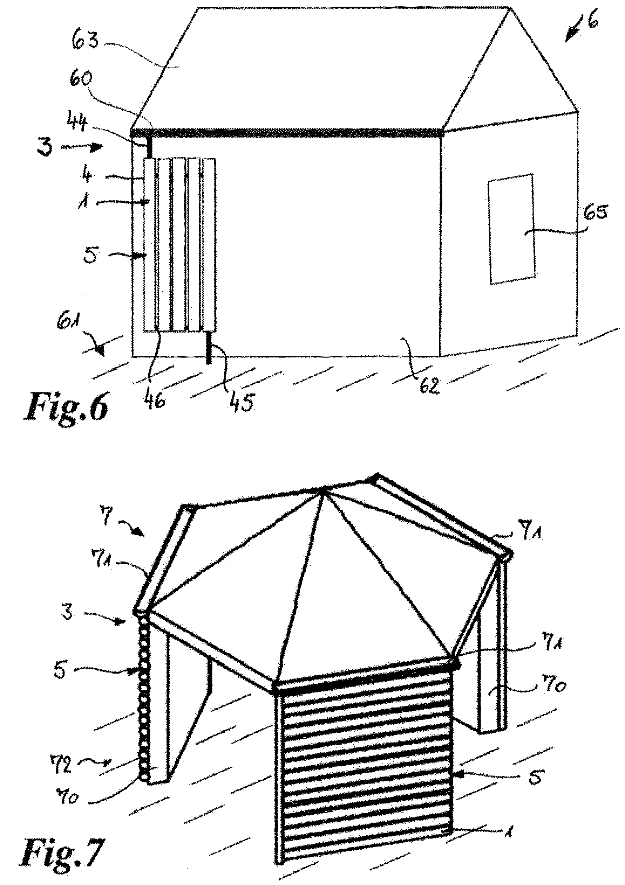

Anstelle des in Betriebsposition horizontalen Anordnens der mediumdurchströmbaren Körper 1 in der Lamelle 4 oder der als Lamelle 4 ausgebildeten mediumdurchströmbaren Körper 1 können diese auch etwa senkrecht in Raumrichtung angeordnet werden, wie bei der Ausführungsvariante nach Figur 6 gezeigt, oder in einem beliebigen Winkel zur Vertikalen oder Horizontalen angeordnet werden. Auch in Figur 6 bilden die beispielhaft gezeigten fünf mediumdurchströmbaren Körper 1 in Form von Lamellen 4 ein Begrünungselement 5. Die erste Lamelle 4 ist über eine Zuführleitung 44 mit einer Regenrinne 60 eines Hauses 6 fluidverbunden und die fünfte, somit letzte Lamelle 4 mündet über eine Abführleitung 45 in ein Kanalsystem im Bodenbereich 61 vor dem Haus 6. Das Kanalsystem ist in Figur 6 jedoch nicht gezeigt. Auch die vertikal in Raumrichtung angeordneten Lamellen 4 in dieser Ausführungsvariante des Begrünungselements 5 des Begrünungssystems 3 sind untereinander über Verbindungsleitungen 46 fluidverbunden. Ferner sind die Lamellen 4 mechanisch miteinander zu dem Begrünungselement 5 verbunden. Die hier beispielhaft gezeigten fünf miteinander zu dem Begrünungselement 5 verbundenen Lamellen 4, enthaltend die mediumdurchströmbaren Körper 1, bilden somit eine Einheit, die vor oder an einer Fassade 62 des Gebäudes 6 angeordnet und befestigt werden kann. Das Begrünungselement 5 kann somit fest an dem Gebäude 6 bzw. dessen Fassade 62 installiert und an eine Regenrinne oder ein anderes insbesondere im Bereich des Dachs 63 des Gebäudes 6 angeordnetes Wasserauffangelement 60 einerseits und andererseits den Bodenbereich 61 bzw. ein Kanalsystem in diesem angeschlossen werden. Auch diese Lamellen 4 können feststehend oder beweglich in entsprechenden Führungsschienen aufgenommen werden, um diese beispielsweise vor dem Fenster 65 des Gebäudes 6 anordnen zu können, so dass das Begrünungselement dann Teil eines Beschattungssystems für das Fenster 65 ist.

In den Figuren 7, 7a ist eine weitere Ausführungsform von Begrünungselementen 5 des Begrünungssystems 3 gezeigt. Hierbei sind eine Anzahl von mediumdurchströmbaren Körpern 1 in Raumrichtung etwa horizontal, parallel zueinander auf Wandungselementen 70 eines Pavillons 7 angeordnet. Alternativ können die Begrünungselemente 5 oder zumindest eines von diesen selbsttragend ausgebildet werden, so dass die Wandelemente 70 entfallen können und die Begrünungselemente 5 selbst die Wandelemente bilden.

Die Wandungselemente 70 des Pavillons 7 können durch die Begrünungselemente 5 begrünt werden, da auf den mediumdurchströmbaren Körpern 1 wiederum jeweils eine Pflanzenschicht 2 aufwachsen oder angeordnet werden kann. Auch bei dieser Ausführungsvariante der Begrünungselemente 5 werden die mediumdurchströmbaren Körper 1 untereinander fluidverbunden, wobei insbesondere der jeweils oberste mediumdurchströmbare Körper 1 über eine Zuführleitung, die in Figur 7, 7a nicht gezeigt ist, mit einem Wasserauffangelement in Form einer Regenrinne 71 verbunden wird oder ist, während der unterste mediumdurchströmbare Körper 1 über eine ebenfalls nicht gezeigte Abführleitung mit einem Bodenbereich 72, auf dem der Pavillon 7 steht, fluidverbunden wird, so dass über die Zuführleitung der oberste mediumdurchströmbare Körper 1 mit von dem Wasserauffangelement in Form der Regenrinne 71 aufgefangenem Regenwasser gespeist werden kann, über jeweilige Verbindungsleitungen zwischen den einzelnen mediumdurchströmbaren Körpern 1 das Wasser von dem jeweils oberen zu dem darunterliegenden mediumdurchströmbaren Körper 1 weitergeleitet wird, bis schließlich am untersten mediumdurchströmbaren Körper 1 nach dessen Durchströmen das noch verbleibende Medium, insbesondere Wasser, aus diesem durch die Abführleitung nach außen abgeführt wird in den Bodenbereich 72, insbesondere ein dort angeordnetes Auffangbehältnis, wie eine Zisterne oder ein Kanalsystem.

Anstelle eines horizontal oder vertikal im Raum stehenden Anordnens der mediumdurchströmbaren Körper 1 bzw. Lamellen 4, die diese enthalten oder bilden, kann ein jeweiliges Begrünungselement 5 auch in beliebiger Raumrichtung angeordnete mediumdurchströmbare Körper 1 aufweisen, also insbesondere solche, die in einem Winkel zur Vertikalen angeordnet sind, wobei über die Wahl des Neigungswinkels der mediumdurchströmbaren Körper 1 die Verweildauer des Fluids, wie Wasser, im Inneren des mediumdurchströmbaren Körpers 1 eingestellt werden kann. Hydrostatische Effekte können hierbei somit optimal genutzt werden.

Sofern ein Rückführen von Medium, insbesondere Wasser, aus dem Bodenbereich zurück zu dem als oberstes angeordneten mediumdurchströmbaren Körper 1 des Begrünungselements 5 des Begrünungssystems 3 oder ein Fördern aus einem Wasserspeicher, wie einer Zisterne oder einem Kanalsystem, zu dem in Raumrichtung als oberstes angeordneten mediumdurchströmbaren Körper 1 erfolgen soll, kann dies beispielsweise durch eine Pumpeinrichtung 32 der Mediumzuführeinrichtung 38 erfolgen, wie sie in Figur 8 angedeutet ist. Hier umfasst das Begrünungssystem vier Begrünungselemente 5, beispielsweise solche, wie sie in den Figuren 4 bis 7a gezeigt sind, die jeweils eine Anzahl von mediumdurchströmbaren Körpern 1 umfassen können. Diesen wird über eine Zuführleitung 30 Medium bzw. Wasser aus einem Wasserspeicher 31, gefördert über die Pumpeinrichtung 32, zugeführt. Um Schwebstoffe aus dem Wasser, das im Wasserspeicher 31 gespeichert wird, herauszufiltern, bevor das Wasser die Pumpeinrichtung 32 erreicht und diese ggf. zusetzen bzw. beschädigen kann, ist in einer Zuführleitung 33 zwischen dem Wasserspeicher 31 und der Pumpeinrichtung 32 ein Filterelement 34 angeordnet. Um die Pumpeinrichtung 32 mit Strom zu versorgen, erweist es sich als sehr vorteilhaft, eine autarke Stromversorgung über eine Energieversorgungseinrichtung 37, die z.B. eine Photovoltaikanlage mit Solarmodulen oder auch eine Mikro-Windanlage umfassen kann, vorzusehen. In Figur 8 sind beispielhaft Solarmodule 35, die über eine elektrische Leitung 36 mit der Pumpeinrichtung 32 verbunden sind, gezeigt. Das Begrünungssystem 3 ist somit autark, da die Pumpeinrichtung 32 über die Solarmodule 35 permanent mit Strom versorgt werden kann, so dass kontinuierlich Wasser aus dem Wasserspeicher 31 über die Zuführleitungen 33, 30 den Begrünungselementen 5 des Begrünungssystems 3, die eine Anzahl von mediumdurchströmbaren Körpern 1 umfassen können, zugeführt werden kann. Insbesondere kann von diesen auch eine Rückführleitung zurück zu dem Wasserspeicher 31 vorgesehen werden, die Teil der Mediumabführeinrichtung 39 sein kann. Über die Rückführleitung bzw. die Mediumabführeinrichtung 39 kann Wasser, das von den Pflanzen der Pflanzenschicht 2, die die mediumdurchströmbaren Körper 1 umgeben, nicht aufgenommen wurde, zu dem Wasserspeicher 31 rückgeführt werden, um erneut für die Wasserversorgung der Begrünungselemente 5 des Begrünungssystems 3 zur Verfügung zu stehen.

In den Figuren 9a und 9b ist eine alternative Ausführungsform des mediumdurchströmbaren Körpers 1 gezeigt, der als vertikale Lamelle verwendet werden kann. Der mediumdurchströmbare Körper 1 ist in der in den Figuren 9a und 9b gezeigten Variante nicht vollumfänglich begrünt, sondern weist außenseitig eine Freifläche zum Versehen mit z.B. Solarzellen, zumindest einer Beleuchtungseinrichtung oder auch Werbung oder ähnlichem auf. Bei dieser Ausführungsvariante des mediumdurchströmbaren Körpers 1 ist es somit nicht erforderlich, separate Solarmodule vorzusehen, vielmehr können diese direkt auf der Außenseite des mediumdurchströmbaren Körpers 1 angeordnet werden. Zu diesem Zweck weist der mediumdurchströmbare Körper 1 außenseitig ein zylindrisches Lochblech 8 als äußere Mantelfläche des mediumdurchströmbaren Körpers 1, beabstandet dazu den Tragkörper 11, hier in Form eines Innenrohres, und Trennstege 80 als Abstandshalter zwischen dem als Innenrohr ausgebildeten Tragkörper 11 und dem zylindrischen Lochblech 8 auf. In den Zwischenraum zwischen dem Tragkörper 11, dem zylindrischen Lochblech 8 und zwei Trennstegen 80, die ein Ringsegment oder Segment 84 begrenzen, ist die Nährstoffe und/oder Fluid aufnehmende Einrichtung 13 insbesondere in Form eines Schaummaterials eingefügt. Auf der Außenseite der Nährstoffe und/oder Fluid aufnehmenden Einrichtung 13 ist die Pflanzenschicht 2 als Begrünung aufgewachsen. In diesem Abschnitt bzw. Segment 84 des mediumdurchströmbaren Körpers 1 können in dem als Innenrohr ausgebildeten Tragkörper 11 Durchgangsöffnungen bzw. Löcher zur Versorgung der Pflanzenschicht 2 mit Medium, wie Wasser, vorgesehen werden. Diese Durchgangsöffnungen 110 sind in Figur 9b lediglich angedeutet. Durch das Innenrohr bzw. den Tragkörper 11 und/oder zumindest eine dort eingefügte Rohrleitung kann Medium, insbesondere Wasser, strömen. Dementsprechend kann das innere Durchströmungslumen 10 des als Innenrohr ausgebildeten Tragkörpers 11 offen vorgesehen werden. Ferner ist es möglich, beispielsweise saugfähiges Granulat dort einzufüllen, so dass das Medium durch dieses angesogen wird bzw. strömen kann und dementsprechend für die Versorgung der Pflanzenschicht 2 auf der Außenseite 81 des zylindrischen Lochblechs 8 zur Verfügung steht.

Die Segmente 82, 83 des mediumdurchströmbaren Körpers 1, die in den Figuren 9a und 9b nicht begrünt sind, also nicht mit der Pflanzenschicht 2 versehen sind, können beispielsweise zum Anordnen von Leuchtdioden (LEDs) oder Solarzellen verwendet werden, wobei diese auf dem zylindrischen Lochblech 8 angeordnet und dort befestigt werden können. Ebenfalls steht diese Außenseite 81 des Lochblechs 8 für eine weitere Bepflanzung zum Beispiel mit jahreszeitlich unterschiedlichen Pflanzen zur Verfügung. Dementsprechend kann beispielsweise ein Segment 83 des mediumdurchströmbaren Körpers 1, das zwischen jeweils zwei Trennstegen 80 angeordnet ist, zum Bepflanzen mit Sommerpflanzen verwendet werden, ein anderes Segment 84 zum Bepflanzen mit Winterpflanzen. Diese Segmente können jeweils mit der Einrichtung 13, insbesondere Schaummaterial, versehen sein oder werden. Ferner kann die Außenseite 81 des zylindrischen Lochblechs 8 des mediumdurchströmbaren Körpers 1, z.B. im Bereich des Segments 82 und/oder 83, auch als Werbefläche genutzt werden durch entsprechenden Aufdruck oder entsprechende Anordnung eines Werbeträgers.

Am oberen bzw. ersten Ende 160 und/oder unteren bzw. zweiten Ende 161 des mediumdurchströmbaren Körpers 1 in Figur 9a kann ein Abschlussdeckel 163 angeordnet werden. Wie Figur 10 entnommen werden kann, kann ferner am oberen bzw. ersten Ende 160 des mediumdurchströmbaren Körpers 1 eine Antriebseinrichtung 164 angeordnet werden. In dem in Figur 10 gezeigten Ausführungsbeispiel ist dies beispielhaft ein Zahnrad, wobei auch eine andere Art einer Antriebseinrichtung hier vorgesehen werden kann. Über die Antriebseinrichtung, die beispielsweise über einen elektrischen Antrieb angetrieben werden kann, ist eine Rotation des insbesondere vertikal im Raum aufgestellten mediumdurchströmbaren Körpers 1 (in Form einer vertikalen Lamelle) möglich. Hierdurch können jahreszeitlich variierend oder auch über den Tag variierend unterschiedliche Seiten oder Abschnitte der Außenseite des mediumdurchströmbaren Körpers 1 zu einem Gebäude oder einer Fassade oder einem Wandelement etc. oder in Richtung zum Tageslicht angeordnet werden. Es kann somit bedarfsgerecht über den Tag verteilt eine bestimmte Seite bzw. ein bestimmter Umfangsabschnitt der Außenseite des mediumdurchströmbaren Körpers 1 von außen sichtbar sein, während die übrigen Umfangsabschnitte des mediumdurchströmbaren Körpers 1 beispielsweise in Richtung der Fassade, eines Gebäudes, eines Wandelementes etc. gerichtet sind. Um ein problemloses Rotieren des mediumdurchströmbaren Körpers 1 zu ermöglichen, weist dieser an seinem oberen bzw. ersten Ende 160 eine Schnellverbindungseinrichtung 165 auf, über die ein Anschluss des als Innenrohr ausgebildeten Tragkörpers 11 an ein Verteilerrohr 166 möglich ist. Die Schnellverbindungseinrichtung 165 kann nach Art eines Einklickmechanismus ausgebildet sein und ermöglicht insbesondere im Falle von Service- und Reparaturarbeiten einen schnellen Austausch des mediumdurchströmbaren Körpers, somit einzelner Lamellen 4 eines Begrünungselementes 5 bzw. des Begrünungssystems 3. Die Schnellverbindereinrichtung 165 kann insbesondere von der zugänglichen Seite, wie einer Vorderseite, eines entsprechenden Begrünungselementes 5 ohne Demontage weiterer Komponenten von diesem gut zugänglich bedient werden. Zudem entfällt die Demontage des gesamten Begrünungssystems 3 bei Ausfall lediglich einzelner Lamellen 4. Als mögliche Ausführungsform der Schnellverbindungseinrichtung 165 kann beispielsweise auch eine federbelastete Druckplatte vorgesehen werden, die in ein Lager im Verteilerrohr 166 einsteckbar ausgebildet ist. Auch andere Ausführungsvarianten der Schnellverbindungseinrichtung 165 sind möglich.

Innerhalb des als Innenrohr ausgebildeten Tragkörpers 11 kann ferner zumindest ein Steigrohr angeordnet werden, das dem Ablauf von Medium im Falle einer vollständigen Sättigung eines saugfähigen Granulats, mit dem das Innenrohr gefüllt ist, dient.

Neben den im Vorstehenden beschriebenen und in den Figuren gezeigten Ausführungsvarianten von mediumdurchströmbaren Körpern und einem Begrünungssystem mit zumindest einem Begrünungselement mit zumindest einem solchen mediumdurchströmbaren Körper können noch zahlreiche weitere gebildet werden, insbesondere auch beliebige Kombinationen der vorstehend genannten Merkmale von diesen, wobei jeweils der mediumdurchströmbare Körper entweder selbsttragend ist oder zumindest einen mechanische Stabilität verleihenden Tragkörper und zumindest eine Nährstoffe und/oder Fluid aufnehmende Einrichtung umfasst, wobei auf der Außenseite des mediumdurchströmbaren Körpers eine Pflanzenschicht getragen, aufwachsen bzw. angeordnet werden kann. Das Begrünungssystem umfasst zumindest ein Begrünungselement mit zumindest einem solchen mediumdurchströmbaren Körper und zumindest eine Mediumzuführeinrichtung zum Einspeisen von Medium in den zumindest einen mediumdurchströmbaren Körper und zumindest eine Mediumabführeinrichtung zum Ableiten von Medium aus dem zumindest einen Begrünungselement heraus, insbesondere in einen Bodenbereich hinein.

### Bezugszeichenliste

- 1: mediumdurchströmbarer Körper
- 2: Pflanzenschicht
- 3: Begrünungssystem
- 4: Lamelle
- 5: Begrünungselement
- 6: Gebäude
- 7: Pavillon
- 8: zylindrisches Lochblech
- 10: inneres Durchströmungslumen
- 11: Tragkörper
- 12: Außenseite von 11
- 13: Nährstoffe und/oder Fluid aufnehmende Einrichtung
- 14: Außenseite von 13
- 15: Rohrleitungsabschnitt
- 16: Ende
- 17: trichterförmiger Abschnitt
- 18: Ventilklappe
- 19: Innenseite
- 30: Zuführleitung
- 31: Wasserspeicher
- 32: Pumpeinrichtung
- 33: Zuführleitung
- 34: Filterelement
- 35: Solarmodul
- 36: elektrische Leitung
- 37: Energieversorgungseinrichtung
- 38: Mediumzuführeinrichtung
- 39: Mediumabführeinrichtung
- 40: Führungsschiene
- 41: Führungsschiene
- 42: Blendenelement
- 43: Schlauch
- 44: Zuführleitung
- 45: Abführleitung
- 46: Verbindungsleitung
- 60: Wasserauffangelement/Regenrinne
- 61: Bodenbereich
- 62: Fassade
- 63: Dach
- 65: Fenster
- 70: Wandelement
- 71: Wasserauffangelement/Regenrinne
- 72: Bodenbereich
- 80: Trennsteg
- 81: Außenseite
- 82: Segment
- 83: Segment
- 84: Segment
- 110: Durchgangsöffnung
- 130: äußere Schaumschicht
- 131: innere Schaumschicht
- 150: Ventileinrichtung
- 160: oberes/erstes Ende
- 161: unteres/zweites Ende
- 163: Abschlussdeckel
- 164: Antriebseinrichtung
- 165: Schnellverbindungseinrichtung
- 166: Verteilerrohr
- D: Außendurchmesser

## Patentansprüche

1. Mediumdurchströmbarer Körper (1), insbesondere fluid- und/oder gasdurchströmbarer Körper, mit zumindest einer Außenseite (14), wobei der mediumdurchströmbare Körper (1) selbsttragend ist oder zumindest einen mechanische Stabilität verleihenden Tragkörper (11) umfasst,
**dadurch gekennzeichnet, dass**
der mediumdurchströmbare Körper (1) zumindest eine Nährstoffe und/oder Fluid aufnehmende Einrichtung (13) umfasst, wobei die Außenseite (14) des mediumdurchströmbaren Körpers (1) als Trägereinrichtung zum Tragen von Pflanzen ausgebildet ist.

2. Mediumdurchströmbarer Körper (1) nach Anspruch 1,
**dadurch gekennzeichnet, dass**
die Einrichtung (13) zumindest ein offenporiger, geschäumter Kunststoff ist oder zumindest einen solchen umfasst, insbesondere die Einrichtung (13) zumindest eine äußere offenzellige Schaumschicht (130) zum Verkrallen von Pflanzen und zumindest eine innere Schaumschicht (131) umfasst, die dem Speichern von Fluid, wie Wasser, und Nährstoffen dient, insbesondere der offenporige geschäumte Kunststoff auf Basis von zumindest einem der Stoffe Polyamid (PA), Polypropylen (PP), Polyethylen (PE), Polyurethan (PUR), zumindest einem Duroplasten, zumindest einem biobasierten Kunststoff, wie Polylactid (PLA), hergestellt ist.

3. Mediumdurchströmbarer Körper (1) nach Anspruch 1 oder 2,
**dadurch gekennzeichnet, dass**
der mediumdurchströmbare Körper (1) als Medienleitung oder ein oder mehrere Medienleitungsabschnitte, insbesondere Rohrleitung oder ein oder mehrere Rohrleitungsabschnitt(e) (15), ausbildbar oder ausgebildet ist, insbesondere der mediumdurchströmbare Körper (1), insbesondere in Ausbildung als Medienleitung oder Medienleitungsabschnitt(e), wie Rohrleitung oder Rohrleitungsabschnitt(e) (15), endseitig mit zumindest einem Verbindungs- oder Schnittstellenabschnitt und/oder zumindest einer Verbindungseinrichtung, insbesondere einem Leitungsverbinder, versehbar oder versehen ist zum Verbinden mit zumindest einem weiteren mediumdurchströmbaren Körper (1) und/oder zum Verbinden mit zumindest einer Mediumzu- oder -abführeinrichtung, insbesondere einer Wasserentnahmestelle oder einem Abwassersystem.

4. Mediumdurchströmbarer Körper (1) nach einem der vorstehenden Ansprüche,
**dadurch gekennzeichnet, dass**
der mediumdurchströmbare Körper (1) mehrschichtig aufgebaut ist und die Schichten Funktionsschichten sind, wobei zumindest eine Wasserführungsschicht und/oder zumindest eine Wasserspeicherschicht und/oder zumindest eine Nährstoffspeicherschicht und/oder zumindest eine Schicht zur mechanischen Stabilisierung vorgesehen ist/sind.

5. Mediumdurchströmbarer Körper (1) nach einem der vorstehenden Ansprüche,
**dadurch gekennzeichnet, dass**
der zumindest eine Tragkörper (11) zumindest abschnittsweise außenseitig mit der zumindest einen Nährstoffe und/oder Fluid aufnehmenden Einrichtung (13) versehen ist.

6. Mediumdurchströmbarer Körper (1) nach einem der vorstehenden Ansprüche,
**dadurch gekennzeichnet, dass**
der mediumdurchströmbare Körper (1) als Hohlkörper ausgebildet ist und zumindest ein inneres Durchströmungslumen (10) und zumindest eine dieses umgebende Wandung aufweist, die zumindest zum Teil von der zumindest einen Nährstoffe und/oder Fluid aufnehmenden Einrichtung (13) gebildet oder umgeben ist und/oder der mediumdurchströmbare Körper (1) vollständig aus einem oder mehreren offenporigen Schaummaterialien ausgebildet ist und/oder zumindest ein inneres Durchströmungslumen (10) des mediumdurchströmbaren Körpers (1) mit zumindest einem offenporigen Schaummaterial ausgefüllt ist.

7. Mediumdurchströmbarer Körper (1) nach einem der vorstehenden Ansprüche,
**dadurch gekennzeichnet, dass**
zumindest eine Einrichtung zum Feuchthalten des zumindest einen mediumdurchströmbaren Körpers (1) vorgesehen ist, insbesondere der mediumdurchströmbare Körper (1) im Innern, insbesondere endseitig im Innern, mit zumindest einer Ventileinrichtung (18) oder zumindest einer Federklappe zur Mediumzulaufsteuerung und/oder zur Mediumauslaufsteuerung zur Steuerung des Zustroms und/oder zum Verhindern eines Ausströmens von Medium aus dem Innern des mediumdurchströmbaren Körpers (1) versehen ist.

8. Mediumdurchströmbarer Körper (1) nach einem der vorstehenden Ansprüche,
**dadurch gekennzeichnet, dass**
der mediumdurchströmbare Körper (1) zumindest eine außenseitige Trageinrichtung (8) zum Tragen von Pflanzen und/oder zum Anordnen zumindest einer Beleuchtungseinrichtung, zumindest eines Solarmoduls, zumindest einer Werbeeinrichtung aufweist, insbesondere zumindest ein außenseitig an dem mediumdurchströmbaren Körper (1) angeordnetes Lochblech, und/oder dass zumindest eine Antriebseinrichtung (164) zum gezielten Ausrichten des mediumdurchströmbaren Körpers (1) vorgesehen ist.

9. Begrünungssystem (3) mit zumindest einem Begrünungselement (5) zur Montage an einer Fläche (62, 70) und zumindest einer Mediumzuführeinrichtung (38) zum Speisen des zumindest einen Begrünungselements (5) mit Medium und zumindest einer Mediumabführeinrichtung (39) zum Abführen von Medium aus dem zumindest einen Begrünungselement (5), wobei das zumindest eine Begrünungselement (5) zumindest einen mediumdurchströmbaren Körper (1) nach einem der vorstehenden Ansprüche umfasst und wobei der zumindest eine mediumdurchströmbare Körper (1) im Raum so angeordnet ist oder wird, dass ein Gefälle zum Erzeugen einer Strömung und/oder eine Mediumverteilung in dem zumindest einen mediumdurchströmbaren Körper (1) vorgesehen ist.

10. Begrünungssystem (3) nach Anspruch 9,
**dadurch gekennzeichnet, dass**
das Begrünungssystem (3) modular aufgebaut ist und eine Anzahl von mediumdurchströmbaren Körpern (1) in Form von Rohrleitungsabschnitten (15) umfasst, die lösbar miteinander verbindbar oder verbunden sind, insbesondere die Rohrleitungsabschnitte (15) steckbar miteinander lösbar verbindbar oder verbunden sind.

11. Begrünungssystem (3) nach Anspruch 9 oder 10,
**dadurch gekennzeichnet, dass**
das Begrünungssystem (3) als autarke Einheit ausgebildet ist und die zumindest eine Mediumzuführeinrichtung (38) zumindest eine Pumpeinrichtung (32) zum Fördern von Medium zu dem zumindest einen mediumdurchströmbaren Körper (1) des zumindest einen Begrünungselements (5) und zumindest eine Energieversorgungseinrichtung (37) zum Versorgen der Pumpeinrichtung (32) mit Energie, insbesondere auf Basis von Photovoltaik und/oder Windkraft, umfasst.

12. Begrünungssystem (3) nach einem der Ansprüche 9 bis 11,
**dadurch gekennzeichnet, dass**
in der Betriebsposition des zumindest einen Begrünungselements (5) der oder die mediumdurchströmbare(n) Körper (1) in horizontaler und/oder vertikaler Ausrichtung und/oder zumindest einem Winkel zur Vertikalen angeordnet ist/sind und/oder dass das zumindest eine Begrünungselement (5) und/oder dessen zumindest einer mediumdurchströmbarer Körper (1) starr oder beweglich an einem Gebäude (6) befestigbar oder befestigt ist/sind.

13. Begrünungssystem (3) nach einem der Ansprüche 9 bis 12,
**dadurch gekennzeichnet, dass**
das zumindest eine Begrünungselement (5) in Form eines Beschattungssystems zur Anordnung vor einem oder mehreren Fenstern (65) eines Gebäudes (6) ausgebildet ist, wobei Lamellen (4) des als Beschattungssystem ausgebildeten Begrünungselements (5) mit zumindest einem mediumdurchströmbaren Körper (1) versehen oder als ein solcher ausgebildet sind, insbesondere die Lamellen (4) über Medienleitungen (43, 44, 46) miteinander und mit zumindest einer Mediumquelle (31, 60, 71) fluidverbindbar oder fluidverbunden sind.

14. Begrünungssystem (3) nach einem der Ansprüche 9 bis 13,
**dadurch gekennzeichnet, dass**
das zumindest eine Begrünungselement (5) selbsttragend an einer Gebäudefassade (62) und/oder einem Wandelement (70) angeordnet oder als zumindest ein Wandelement oder Fassadenelement eines Gebäudes ausgebildet und mit der zumindest einen Mediumzuführeinrichtung (38) zur Zufuhr von Medium und der zumindest einen Mediumabführeinrichtung (39) zur Abfuhr von Medium fluidverbindbar oder fluidverbunden ist.

15. Begrünungssystem (3) nach einem der Ansprüche 9 bis 14,
**dadurch gekennzeichnet, dass**
zumindest ein Filterelement (34) zum Filtern zuströmenden Mediums, insbesondere Regenwassers, im Bereich der Mediumzuführeinrichtung (38), insbesondere einer Zuführleitung (33), vorgesehen ist.
